# EUROPEAN PATENT APPLICATION

(11) **EP 4 488 852 A1**
(43) Date of publication of application: **08.01.2025**
(21) Application number: 23784291.9
(22) Date of filing: 05.04.2023
(51) Int. Cl.: G06F 16/9532

(54) **SEARCH RECOMMENDATION METHOD AND APPARATUS, DEVICE, AND STORAGE MEDIUM**

(30) Priority: 06.04.2022 CN 202210358726
(71) Applicant: Beijing Zitiao Network Technology Co., Ltd., Beijing 100190 (CN)
(72) Inventor: XING, Jiancheng, Beijing 100028 (CN); JIN, Xiaoshu, Beijing 100028 (CN); ZHANG, Wenshu, Beijing 100028 (CN); ZHONG, Wenjun, Beijing 100028 (CN); CHEN, Shaoming, Beijing 100028 (CN); LV, Qiming, Beijing 100028 (CN); LUO, Qunfeng, Beijing 100028 (CN)
(74) Representative: Dentons UK and Middle East LLP
(86) International application number: PCT/CN2023/086338
(87) International publication number: WO 2023/193728

(57) **Abstract**

According to embodiments of the present disclosure, a method, apparatus, device, and storage medium for search recommendation are provided. The method comprises determining whether a search box is to be presented in a page; presenting the search box on the page in response to a determination that the search box is to be presented; determining a search recommendation term based on multimedia content presented on the page; and presenting at least a part of the search recommendation term in the search box. In this way, the search recommendation term is to be presented to the user according to the multimedia content that the user is interested in, so as to meet the personalized needs of the user. It also enables the user to search the multimedia content that he/she is interested in without affecting the current viewing process, thereby improving the user experience.

## Description

This application claims the benefit of CN Patent Application No. 202210358726.7 filed on April 6, 2022, entitled "METHOD, APPARATUS, DEVICE AND STORAGE MEDIUM FOR SEARCH RECOMMENDATION", which is hereby incorporated by reference in its entirety.

### Field

Example embodiments of the present disclosure relate generally to the computer technology, and specifically, to a method, apparatus, device and computer-readable storage media for search recommendation.

### Background

More and more applications are designed to provide various services to users. For example, users can browse, comment and forward various contents in content sharing applications, including multimedia contents such as video, images, image sets and sound. Such applications allow users to select the multimedia content of interest according to their own preferences through the search operation. The applications can also provide the users with search recommendations associated with the multimedia content according to the user preferences collected by the application, so as to improve the interaction experience.

### Summary

According to example embodiments of the present disclosure, a solution for search recommendation is provided to further enhance the search recommendation.

In a first aspect of the present disclosure, there is provided a method of search recommendation. The method comprises determining whether a search box is to be presented in a page; presenting the search box on the page in response to a determination that the search box is to be presented; determining a search recommendation term based on multimedia content presented on the page; and presenting at least a part of the search recommendation term in the search box.

In a second aspect of the present disclosure, there is provided an apparatus for search recommendation. The apparatus comprises a first determination module configured to determine whether a search box is to be presented in a page; a first presentation module configured to present the search box on the page in response to a determination that the search box is to be presented; a second determination module configured to determine a search recommendation term based on the multimedia content presented on the page; and a second presentation module that presents at least a part of the search recommendation term in the search box.

In a third aspect of the present disclosure, there is provided an electronic device. The device comprising at least one processing unit; and at least one memory coupled to the at least one processing unit and storing instructions for execution by the at least one processing unit. The instructions, when executed by at least one processing unit, cause the device to perform the method of the first aspect.

In a fourth aspect of the present disclosure, there is provided a computer-readable storage medium having a computer program stored thereon. The program, when executed by a processor, carries out the method of the first aspect.

It is to be understood that the contents described in the Summary section are not intended to limit the key features or important features of the embodiments of the present disclosure, nor are they intended to limit the scope of the present disclosure. Other features of the present disclosure will be readily understood by the following description.

### Brief Description of Drawings

The above and other features, advantages and aspects of embodiments of the present disclosure will become more apparent in combination with the drawings and with reference to the following detailed description. In the drawings, the same or similar reference numerals denote the same or similar elements, wherein:
FIG. 1 illustrates a schematic diagram of an example environment in which embodiments of the present disclosure can be implemented;
FIG. 2 illustrates a flowchart of a process for search recommendation according to some embodiments of the present disclosure;
FIGS. 3, 4A to 4B, 5A and 5B illustrate schematic diagrams of examples of pages of an application according to some embodiments of the present disclosure;
FIGS. 6A to 6B and FIGS. 7A to 7B illustrate schematic diagrams of examples of page interaction of an application according to some embodiments of the present disclosure;
FIG. 8 illustrates a block diagram of an apparatus for search recommendation according to some embodiments of the present disclosure; and
FIG. 9 illustrates a block diagram of an apparatus capable of implementing various embodiments of the present disclosure.

### Detailed Descriptions

Embodiments of the present disclosure will be described in more detail below with reference to the accompanying drawings. Although some embodiments of the present disclosure are shown in the drawings, it is to be understood that the present disclosure can be realized in various forms, and should not be interpreted as being limited to the embodiments set forth herein. On the contrary, these embodiments are provided for a more thorough and complete understanding of the present disclosure. It is to be understood that the drawings and embodiments of the present disclosure are only for illustrative purposes and are not intended to limit the scope of protection of the present disclosure.

In the description of embodiments of the present disclosure, the term "comprise(s)"and similar terms shall be understood as open inclusion, that is, "including but not limited to". The term "based on" is to be understood as "based at least in part on". The term "one embodiment" or "the embodiment" is to be understood as "at least one embodiment". The term "some embodiments" is to be understood as "at least some embodiments". Other explicit and implicit definitions may also be comprised below.

In the description of embodiments of the present disclosure, the term "comprise(s)"and similar terms shall be understood as open inclusion, that is, "including but not limited to". The term "based on" is to be understood as "based at least in part on". The term "one embodiment" or "the embodiment" is to be understood as "at least one embodiment". The term "some embodiments" is to be understood as "at least some embodiments". Other explicit and implicit definitions may also be comprised below.

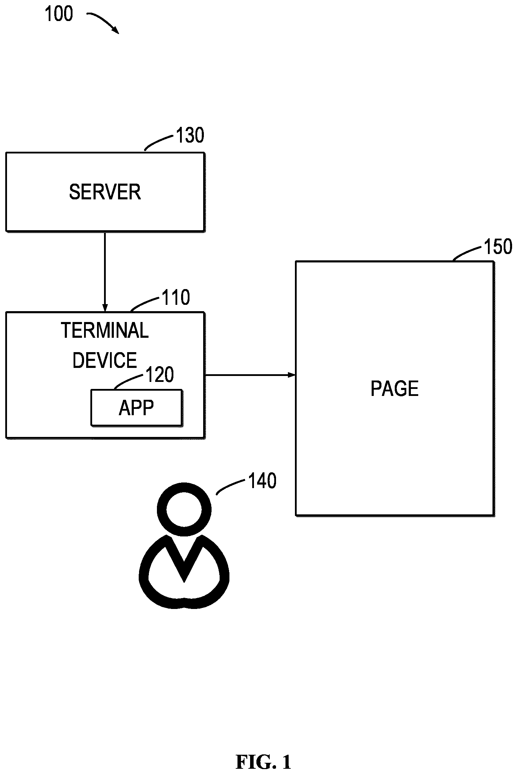

FIG. 1 shows a schematic diagram of an example environment 100 in which embodiments of the present disclosure can be implemented. In this example environment 100, an application 120 is installed in the terminal device 110. The user 140 can interact with the application 120 via the terminal device 140 and/or an attachment device of the terminal device 140. The application 120 may be a content sharing application that can provide services related to the consumption of multimedia content to the user 140, including browsing, commenting, forwarding, creating (e.g., photographing and/or editing), publishing, and so on. In this context, "multimedia content" can be various forms of content, including video, audio, images, image sets, text, and so on.

In the environment 100 of FIG. 1, if the application 120 is in an active state, the terminal device 110 may present the page 150 of the application 120 to the user 140. The page 150 may include various pages provided by the application 120, such as a presentation page of multimedia content, a content creation page, a content editing page, a message page, a personal page, a mall page, and the like.

In some embodiments, the terminal device 110 communicates with the server 130 for provision of services to the application 120. The terminal device 110 may be any type of mobile terminal, fixed terminal or portable terminal, including mobile phone, desktop computer, laptop computer, notebook computer, netbook computer, tablet computer, media computer, multimedia tablet, personal communication system (PCS) device, personal navigation device, personal digital assistant (PDA)An audio / video player, a digital camera / video camera, a positioning device, a television receiver, a radio broadcast receiver, an electronic book device, a game device, or any combination of the foregoing, including accessories and peripherals of these devices, or any combination thereof. In some embodiments, the terminal device 110 can also support any type of interface for the user (such as wearable circuit, etc.). The server 130 is various types of computing systems/servers capable of providing computing capabilities, including but not limited to mainframes, edge computing nodes, computing devices in a cloud environment, and the like.

It is to be understood that the structure and functions of the environment 100 are described for Example purposes only, without suggesting any limitation as to the scope of the present disclosure.

Traditionally, a user interface element(s), such as a search icon, in applications for guiding users to search for multimedia content of interest can be placed at a specific position on a page. If a user wants to search for the multimedia content of interest, the user can find and operate the user interface element so that a current page presenting the multimedia content can be changed to the search page for the user to perform the search operation.

A search box is usually presented in the search page to enable the user to input search keywords associated with the multimedia content of interest. In addition, a search recommendation term list is usually presented in the search page. The search recommendation term list can include one or more search recommendation terms. These search recommendation terms may be determined by the application according to specific conditions. For example, the search recommendation terms can be determined according to the current hot events or topics. For another example, the search recommendation terms can be determined according to user preferences.

In conventional approaches, however, when the user wants to search for the multimedia content that he is interested in, he must pause the viewing of the currently played multimedia content and change to the search page. The viewing process of the multimedia content is thus interrupted, which poses negative effect on the use experience of the application.

Embodiments of the present disclosure propose a solution for search recommendation. According to embodiments as described herein, it is determined whether a search box is to be presented on the page. If it is determined that the search box can be rendered, the search box is rendered on the page. The search recommendation term is determined based on the multimedia content presented on the page, and at least a part of the search recommendation term is presented in the search box. In this way, the search recommendation term is to be presented to the user according to the multimedia content that the user is interested in, so as to meet the personalized needs of the user. The user is also enabled to search the multimedia content without affecting the current viewing process, thereby improving the user experience.

Some example embodiments of the present disclosure will continue to be described below with reference to the accompanying drawings.

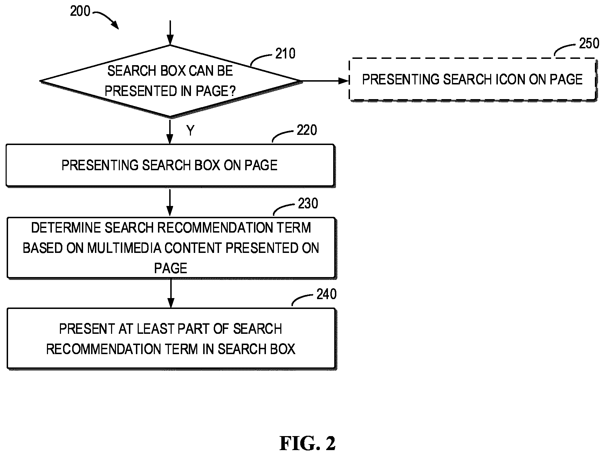

FIG. 2 illustrates a flowchart of a process 200 for search recommendation according to some embodiments of the present disclosure. The process 200 may be implemented at the terminal device 110. For ease of discussion, the process 200 will be described with reference to the environment 100 of FIG. 1.

At block 210, the terminal device 110 determines whether a search box is to be presented on the page 150 of the application 120.

In some embodiments, the terminal device 110 can determine a first length of one or more navigation tabs presented on the page 150 in a predetermined direction and determine a second length of the search box in the predetermined direction. The one or more navigation tabs may be arranged alongside the search box in the predetermined direction. If the terminal device 110 determines that the sum of the first length and the second length is below the total length of the page 150 in the predetermined direction, the terminal device 110 may determine that the search box is to be presented on the page 150.

In some embodiments, if the terminal device 110 determines that the sum of the first length and the second length exceeds the width of the page 150, a search icon is presented on the page 150.

In some embodiments, the predetermined direction may be the direction along the width of the display of the terminal device 110.

In some embodiments, the terminal device 110 may determine the first length based on a display mode associated with the display of one or more navigation tabs. The display mode can be associated with the font size, such as a large font mode or an "Elders" mode, for example.

In some embodiments, the terminal device 110 may also determine the first length based on the number of one or more navigation tabs. While the user 120 is using the application 140, the number of the navigation tabs in the application 120 may change, e.g., according to the needs of the service provider.

In some embodiments, the terminal device 110 may also determine the first length based on the alienated navigation tabs other than the one or more navigation tabs currently presented on the page 150. While the user 140 is using the application 120, an alienated tab(s) may be added according to the needs of the service provider. The alienated navigation tab may be different in appearance form from the one or more navigation tabs presented on the page 150. For example, the alienated navigation tab may have different font types and sizes than the one or more navigation tabs, or may include different numbers and types of words or symbols than the one or more navigation tabs, or the like.

In some embodiments, the terminal device 110 can determine the second length based on a threshold number of words allowed to be presented in the search box.

In some embodiments, the terminal device 110 determines the total length based on the display parameters of the display interface of the terminal device 110. For example, the display parameter includes a width of the display.

At block 220, if the terminal device 110 determines that the search box is to be presented, the terminal device 110 presents the search box on the page 150.

In some embodiments, the terminal device 110 can present a search box at the top of the page 150. It is to be understood that the terminal device 110 may present the search box at the bottom of the page 150 or any other suitable position on the page depending on the specific requirement.

At block 230, the terminal device 110 determines a search recommendation term based on the multimedia content presented on the page 150.

In some embodiments, if the terminal device 110 obtains a content label associated with the multimedia content presented on the page 150, the search recommendation term can be determined based on the content label.

In some embodiments, if the terminal device 110 does not obtain the content label associated with the multimedia content presented on the page 150 (e.g., there is no such a label), the terminal device 110 can determine the default symbol as the search recommendation term, for example.

At block 240, the terminal device 110 presents at least a part of the search recommendation term in the search box.

In some embodiments, the terminal device 110 may compare the number of words included in the search recommendation term with a threshold number. If the terminal device 110 determines that the number of words is less than the threshold number, the terminal device 110 presents a search recommendation term in the search box.

In some embodiments, if the number of words of the terminal device 110 exceeds the threshold number, the terminal device 110 presents in the search box a part of the words included in the search recommendation term as well as a symbol representing the remaining words in the search recommendation term that are omitted.

In some embodiments, a total length of the part of words presented in the search box and the symbol used to represent the omitted part of words in the search recommendation term corresponds to the length of the threshold number of words.

In some embodiments, the terminal device 110 presents the search recommendation term centered in the search box.

In some embodiments, if there is a switch from a further multimedia content to the multimedia content on the page 150, the terminal device 110 may present a switching process from the further search recommendation term associated with further multimedia content to a search recommendation term in the search box.

In some embodiments, if the change from the further multimedia content to the multimedia content is associated with the same navigation tab, the terminal device 110 may cause the switching process from the further search recommendation term to the search recommendation term to be presented in an upward scroll mode or a downward scroll mode.

In some embodiments, if the change from another multimedia content to the multimedia content is associated with a different navigation tab, the terminal device 110 may cause the switching process from another search recommendation term to the search recommendation term to be presented in a f fade-in-fade-out mode.

In some embodiments, the search recommendation term may correspond to a preferred search recommendation term to be presented in the search page of the application 120.

In order to better understand the example embodiments of the presentation of the search recommendation term, the following will be described with reference to the example user interface.

As described above, the terminal device 110 may determine whether the search box is to be presented on the page of the application. If the search box is to be presented, the terminal device 110 presents the search box on the page. For example, the terminal device 110 may make such a determination based on a comparison between the first length of the navigation tab on the page in the predetermined direction and the second length of the search box in the predetermined direction and the total length of the page in the predetermined direction.

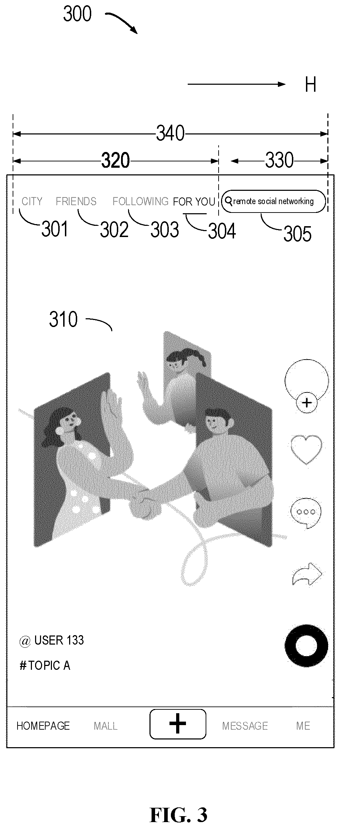

FIG. 3 shows an example page in which a search box is presented in the application 120. On the page 300, the navigation tabs 301 to 304 are arranged at the top of the page 300 in the width direction H of the page 300. The terminal device 110 may determine the first length 320 of the navigation tabs 301 to 304 in the width direction H. The second length 330 of the search box 305 in the width direction H may be determined based on the threshold number of words allowed to appear in the search box.

If the terminal device 110 determines that the sum of the first length 320 and the second length 330 does not exceed the width 340 of the page 300, the terminal device 110 presents a search box 305 on the page 300 as shown in FIG. 3. The search box 305 may be arranged on the top of the page 300 side by side with the navigation tabs 301 to 304 in the width direction H.

It is to be understood that the arrangement of the navigation tabs 301 to 304 and the search box 305 shown in FIG. 3 is only for the purpose of illustration without suggesting any limitations as to the present disclosure. The navigation tabs 301 to 304 and the search box 305 may also be arranged at any other suitable positions of the page 300.

In some scenarios, the terminal device may not be able to render the search box on the page. For example, if the sum of the first length of the navigation tab on the page in the predetermined direction and the second length of the search box in the predetermined direction exceeds the total length of the page in the predetermined direction, the search box will not be rendered.

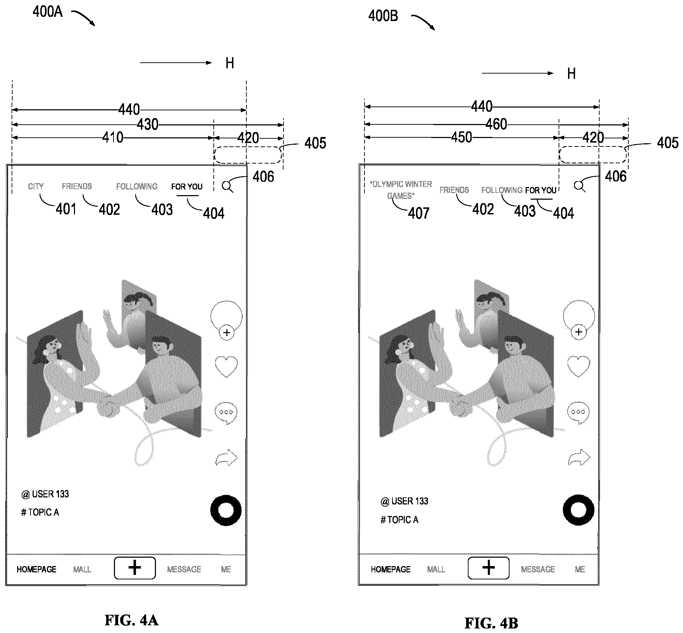

FIGS. 4A and 4B show such pages 400A and 400B. In FIG. 4A, since the display mode of the terminal device 110 is adjusted (e.g., when the display mode is adjusted to the large font mode or "Elders" mode), the fonts of the navigation tabs 401 to 404 will become large. As a result, the first length 410 of the navigation tabs 401 to 404 in the width direction H of the page 400A is significantly increased. Thus, the total length 430 of the first length 410 of the navigation tabs 401 to 404 in the width direction H of the page 400A and the second length 420 of the search box 405 in the width direction H of the page 400A will exceed the total length 440 in the width direction H of the page 400A. In this case, the search box 405 will not be rendered on the page 400A. A graphical interface element for guiding the search, such as a search icon 406, will be presented on page 400A.

In FIG. 4B, the alienated navigation tab 407 is presented on the page 400B. This alienated navigation tab is different in appearance from the navigation tabs 402 to 404 presented on the page 400B, which makes the first length 410 of the alienated navigation tab 407 and the navigation tabs 402 to 404 in the width direction H of the page 400B significantly increase. In this case, the total length 460 of the first length 450 of the alienated navigation tab 407 and the navigation tabs 402 to 404 in the width direction H of the page 400B and the first length 420 of the search box 405 in the width direction H of the page 400B exceeds the total length 440 in the width direction H of the page 400B. In this case, the search box 405 will not be rendered on the page 400B. A graphical interface element for guiding the search, such as a search icon 406, will be presented on the page 400B.

The terminal device further determines a search recommendation term based on the multimedia content presented on the page and presents at least a part of the search recommendation term in the search box.

Reference is still made to FIG. 3. The currently reproduced multimedia content 310 is presented on the page 300. The terminal device 110 may determine a search recommendation term associated with the multimedia content 310. For example, the terminal device 110 may acquire one or more content labels associated with the multimedia content 310 and determine a search recommendation term based on the content labels.

In determining how to present the search recommendation term in the search box 305, the terminal device 110 may determine whether the number of words included in the search recommendation term is less than the threshold number of words that can be allowed to be presented in the search box 305. If so, the words included in the search recommendation term (i.e., the complete search recommendation term) are presented in the search box 305. In FIG. 3, assuming that the threshold number of words that can be allowed to be presented in the search box 305 is 3 and that the number of words included in the determined search recommendation term "remote social networking" is 3, the search recommendation term "remote social networking" is presented in the search box 305.

In some scenarios, the terminal device 110 displays only a part of the determined search recommendation term in the search box of the page, e.g., if the number of words included in the search recommendation term is equal to or greater than the threshold number of words that can be allowed to appear in the search box.

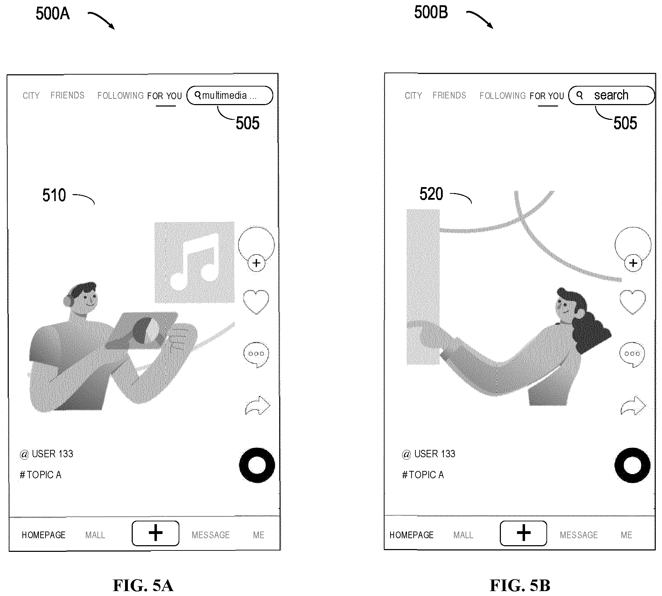

FIG. 5A shows such a page 500A. In FIG. 5A, the currently reproduced multimedia content 510 is presented on the page 500A. The terminal device 110 may determine a search recommendation term associated with the multimedia content 510, such as "multimedia entertainment". The number of words included in the search recommendation term is 2. Assuming that the threshold number of words allowed to be presented in the search box 505 is 2, the number of words included in the search recommendation term is equal to the threshold number of words allowed to be presented in the search box 505.

In this case, the terminal device 110 may display a part of the words of the search recommendation term in the search box 505, and use an ellipsis, for example, to represent the remaining words of search recommendation term that are omitted. For example, in FIG. 5A, the search recommendation term presented in the search box 505 of the page 500A is "multimedia ... ".

In some scenarios, the terminal device can display one or more default symbols in the search box on the page. FIG. 5B shows such a page where the currently reproduced multimedia content 520 is presented on the page 500B. If the terminal device 110 cannot obtain the valid content label associated with the multimedia content 520, the terminal device 110 may present a default symbol as a search recommendation term in the search box 505 of the page 500B. For example the search recommendation term is "search" in the example shown in FIG. 5B.

In the example page as described above, the search recommendation term may be presented in the search box in a centered manner. It is to be understood that the search recommendation term can also be presented in the search box in other ways, such as right alignment. The presentation shown in the drawings should not be considered as limiting to the present disclosure.

In some scenarios, the user will perform the multimedia content change operation after browsing or viewing the multimedia content presented on the page of the application. This can be done by scrolling up-and-down or left-and-right on the page, for example. While the user scrolls the page, the search recommendation term presented in the search box will change with the change of the multimedia content presented on the page. That is, the search recommendation term determined based on the currently presented multimedia content will be changed to the search recommendation term determined based on the multimedia content to be presented after the change.

The change of the search recommendation term is to be presented with a predetermined visual effect. The visual effect may be associated with the navigation tab corresponding to the currently played multimedia content and the changed multimedia content.

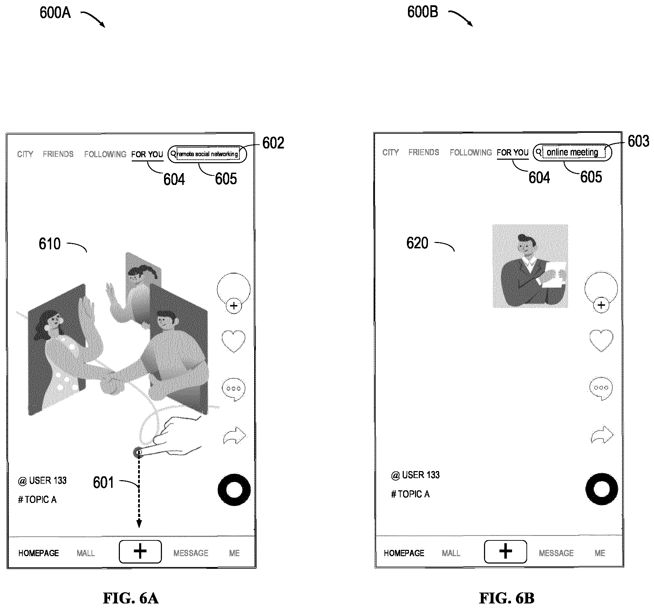

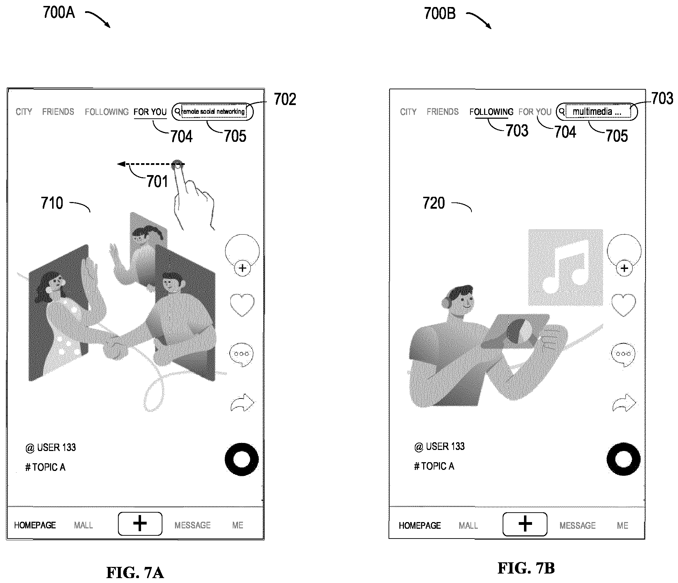

FIGS. 6A, 6B and 7A and 7B illustrate such a handover process.

As shown in FIGS. 6A and 6B, the multimedia content 610 is presented on the page 600A of FIG. 6A. The multimedia content 610 corresponds to the navigation tab 604 selected by the user. The search recommendation term 602, which is determined based on the multimedia content 610 presented on the page 600A, is presented in the search box 605.

In the application, while the user scrolls up and down without changing the selected navigation tab and thus causes the change of the multimedia content on the page, the multimedia contents before and after such a change correspond to the same navigation tab.

As shown in FIGS. 6A and 6B, while the user changes the multimedia content 610 presented on the page 600A to the multimedia content 620 presented on the page 600B shown in FIG. 6B by performing the downward slide operation 601, the multimedia content 610 and the multimedia content 620 correspond to the same navigation tab 604. In this case, the change from the search recommendation term 602 presented in the search box 605 of the page 600A of FIG. 6A to the search recommendation 603 presented in the search box 605 of the page 600B of FIG. 6B may be presented in a manner of slide change. The slide the search recommendation term presented by the slide change of the search recommendation term can correspond to the slide direction in which the user performs the slide operation on the page.

Reference is now made to FIGS. 7A and 7B. The multimedia content 710 is presented on the page 700a of FIG. 7A. The multimedia content 710 corresponds to the navigation tab 704 selected by the user. The search recommendation term 702 determined based on the multimedia content 710 presented on the page 700a is presented in the search box 705.

In the application, while the user performs the left slide operation or the right sliding operation, the selected navigation label will also be changed, that is, the selected navigation label will be changed from the current navigation label to the adjacent navigation label corresponding to the sliding direction of the user. In this scenario, the multimedia content before change and the multimedia content after change correspond to different navigation tabs.

As shown in FIGS. 7A and 7B, when the user changes the multimedia content 710 presented on the page 700a to the multimedia content 720 presented on the page 700B shown in FIG. 7B by performing the left slide operation 701, the multimedia content 710 and the multimedia content 720 correspond to different navigation tabs, that is, the multimedia content 710 corresponds to the navigation tab 704 and the multimedia content 720 corresponds to the navigation tab 703.

In this case, the change from the search recommendation term 702 presented in the search box 705 of the page 700a of FIG. 7A to the search recommendation 703 presented in the search box 705 of the page 700B of FIG. 7B may be presented in the form of fade-in and fade-out change. The direction of fade-in and fade-out of the search recommendation terms associated with the fade-in and fade-out change of the search recommendation terms may correspond to the slide direction in which the user performs the slide operation on the page.

In some embodiments, the pages 300, 400A, 400B, 500A, 500B, 600A, 600B, 700A, and 700B described in connection with FIGS. 3, 4A, 4B, 5A, 5B, 6A, 6B, 7A, and 7B include pages in a multimedia sharing application. In some examples, pages 300, 400A, 400B, 500A, 500B, 600A, 600B, 700a, and 700B described in connection with FIGS. 3, 4A, 4B, 5A, 5B, 6A, 6B, 7A, and 7B include pages in a video sharing application.

Embodiments of the present disclosure can present a search recommendation term for the user according to the multimedia content that the user is interested in, so as to meet the user's personalized requirements. The user is also enabled to search for the multimedia content without affecting the current viewing process, thereby improving user experience.

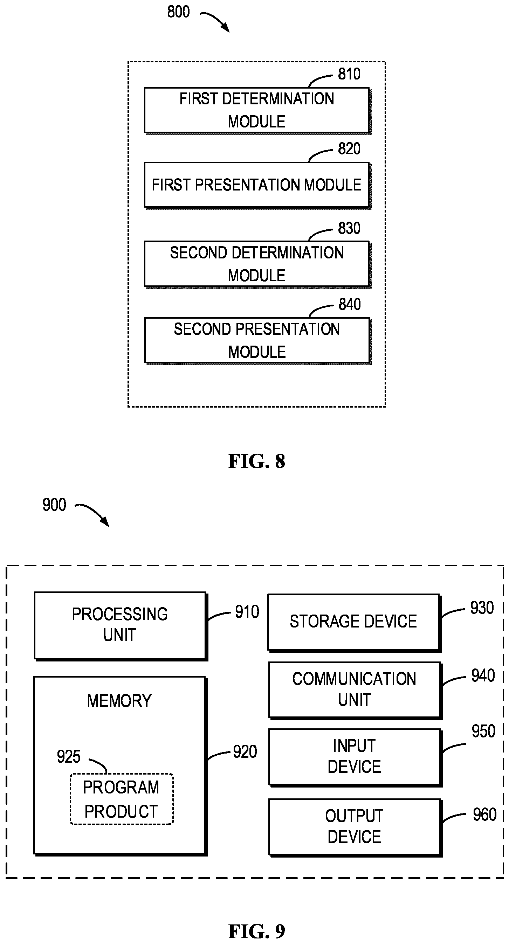

FIG. 8 shows a schematic block diagram of an apparatus 800 for search recommendation according to certain embodiments of the present disclosure. The apparatus 800 may be implemented or included in the terminal device 110. The various modules/components in the apparatus 800 may be implemented by hardware, software.

As shown, the apparatus 800 comprises a first determination module 810 configured to determine whether a search box is to be presented in a page. The apparatus 800 further comprises a first presentation module 820 configured to present the search box on the page if it is determined that the search box is to be presented. The apparatus 800 further comprises a second determination module 830 configured to determine a search recommendation term based on the multimedia content presented on the page. The apparatus 800 further comprises a second presentation module 840 that presents at least a part of the search recommendation term in the search box.

In some embodiments, the first determination module 810 is further configured to determine a first length in a predetermined direction of one or more navigation tabs presented on the page, the one or more navigation tabs being arranged side by side with the search box in the predetermined direction; Determining a second length of the search box in the predetermined direction; And determining that the search box is to be presented on the page if it is determined that the sum of the first length and the second length does not exceed the total length of the page in the predetermined direction.

**In** some embodiments, the first determination module 810 is further configured to determine the first length based on at least one of a display mode associated with the display of the one or more navigation tabs; The number of the one or more navigation tabs; And alienated tabs other than the one or more navigation tabs presented on the page.

**In** some embodiments, the first determination module 810 is further configured to determine the total length based on a display parameter of a device for displaying the page.

**In** some embodiments, the first determination module 810 is further configured to determine the second length based on a threshold number of words allowed to be presented in the search box.

In some embodiments, the first determination module 810 is further configured to present a search icon on the page if it is determined that the sum of the first length and the second length exceeds the width of the page.

In some embodiments, the first presentation module 820 is further configured to present the search box at the top of the page.

In some embodiments, the second determination module 830 is further configured to determine the search recommendation term based on the content label if the content label associated with the multimedia content presented on the page is acquired.

In some embodiments, the second determination module 830 is further configured to determine a default symbol as the search recommendation term if a content label associated with the multimedia content presented on the page is not obtained.

In some embodiments, the search recommendation term corresponds to the preferred search recommendation term to be presented in the search page.

In some embodiments, the second presentation module 840 is further configured to determine whether the number of words included in the search recommendation term is less than a threshold number; And presenting the search recommendation term in the search box if the number of words is less than a threshold number.

In some embodiments, the second presentation module 840 is further configured to present a part of the words included in the search recommendation term and a symbol representing another part of the words omitted in the search recommendation term in the search box if the number of words is not lower than a threshold number.

In some embodiments, the total length of the part of words and the symbol corresponds to the length of the threshold number of words.

In some embodiments, the second presentation module 840 is further configured to present in the search box a switching process from another search recommendation term associated with the other multimedia content to the search recommendation term if a switch from another multimedia content to the multimedia content occurs on the page.

In some embodiments, the second presentation module 840 is further configured to, if the change from the other multimedia content to the multimedia content is associated with the same navigation tab, cause the switching process from the other search recommendation term to the search recommendation term to be presented in an up scroll mode or a down scroll mode.

In some embodiments, the second presentation module 840 is further configured to, if the change from the other multimedia content to the multimedia content is associated with a different navigation tab, cause the switching process from the other search recommendation term to the search recommendation term to be presented in a fade-in-fade-out mode.

In some embodiments, the second presentation module 840 is further configured to present the search recommendation term centrally in the search box.

FIG. 9 shows a block diagram of a computing device 900 in which one or more embodiments of the present disclosure may be implemented. It is to be understood that the computing device 900 shown in FIG. 9 is merely exemplary and should not constitute any limitation on the functionality and scope of the embodiments described herein.

As shown in FIG. 9, computing device 900 is in the form of a general purpose computing device. Components of computing device 900 may include, but are not limited to, one or more processors or processing units 910, memory 920, storage devices 930, one or more communication units 940, one or more input devices 950, and one or more o7utput device 960. The processing unit 910 may be an actual or virtual processor and can perform various processes according to programs stored in the memory 920. In a multi-processor system, multiple processing units execute computer-executable instructions in parallel to increase the parallel processing capabilities of the computing device 900.

The computing device 900 typically comprises a plurality of computer storage media. Such media may be any available media accessible to the computing device 900, including but not limited to volatile and nonvolatile media, removable and non-removable media. The memory 920 may be volatile memory (e.g., register, cache, random access memory (RAM)), non-volatile memory (e.g., read only memory (ROM), electrically erasable programmable read only memory (EEPROM), flash memory), or some combination thereof. The storage device 930 may be a removable or non-removable medium, and may comprise a machine-readable medium, such as a flash drive, a magnetic disk, or any other medium, which may be capable of storing information and/or data (e.g., training data for training) and may be accessed within the computing device 900.

The computing device 900 may further comprise additional removable/non-removable, volatile/nonvolatile storage media. Although not shown in FIG. 9, disk drives for reading or writing from removable, non-volatile magnetic disks (e.g., "floppy disks") and optical disk drives for reading or writing from removable, non-volatile optical disks may be provided. In these cases, each driver may be connected to a bus (not shown) by one or more data medium interfaces. The memory 920 may comprise a computer program product 925 having one or more program modules configured to perform various methods or actions of various embodiments of the present disclosure.

The communication unit 940 enables communication with other computing devices through communication media. Additionally, the functions of the components of the computing device 900 may be implemented in a single computing cluster or multiple computing machines capable of communicating through communication connections. Thus, the computing device 900 may operate in a networked environment using logical connections with one or more other servers, network personal computers (PCs), or another network node.

The input device 950 may be one or more input devices, such as a mouse, a keyboard, a trackball, and the like. The output device 960 may be one or more output devices, such as a display, a speaker, a printer, and the like. The computing device 900 may also communicate, through the communication unit 940 as needed, with one or more external devices (not shown), such as storage devices, display devices, and the like, with one or more devices that enable the user to interact with the computing device 900, or with any device (e.g., network card, modem, etc.) that causes the computing device 900 to communicate with one or more other computing devices. Such communication may be performed via an input/output (I/O) interface (not shown).

According to an example implementation of the present disclosure, there is provided a computer-readable storage medium having one or more computer instructions stored thereon, wherein the one or more computer instructions are executed by a processor to implement the method described above.

Various aspects of the present disclosure are described herein with reference to flowcharts and/or block diagrams of methods, apparatuses (systems) and computer program products implemented in accordance with the present disclosure. It is to be understood that each block of the flowchart and/or the block diagram and combinations of blocks in the flowchart and/or the block diagram may be implemented by computer readable program instructions.

These computer-readable program instructions may be provided to a general-purpose computer, a special purpose computer, or other processing unit programmable for the video recommendation device, thereby producing a machine such that these instructions, when executed by a computer or other processing unit programmable for the video recommendation apparatus, means for implementing the functions/actions specified in one or more of the flow charts and/or block diagrams are generated. These computer-readable program instructions may also be stored in a computer-readable storage medium that causes a computer, a programmable video recommendation apparatus, and/or other devices to operate in a specific manner, so that the computer-readable medium in which the instructions are stored comprises a manufactured article, which comprises instructions for implementing various aspects of the functions/actions specified in one or more blocks of the flowcharts and/or block diagrams.

The computer-readable program instructions may also be loaded onto the computer, other programmable video recommendation apparatus, or other devices, so that a series of operation steps are performed on the computer, other programmable video recommendation apparatus, or other devices to generate a computer implemented process, so as to enable the instructions executed on the computer, other programmable video recommendation apparatus or other devices to implement the functions/actions specified in one or more blocks in the flowcharts and/or block diagrams.

The flow diagrams and block diagrams in the accompanying drawings show the architecture, functions, and operations of possible implementations of systems, methods, and computer program products in accordance with various implementations of the present disclosure. In this regard, each block in the flowcharts or block diagrams may represent a module, a program segment or a part of instructions, and the module, the program segment or the part of instructions contains one or more executable instructions for implementing a specified logical function. In some alternative implementations, the functions indicated in the blocks may also occur in a different order than those indicated in the drawings. For example, two consecutive blocks may actually be executed substantially in parallel, and they may sometimes be executed in reverse order, which may depend on the functions involved. It is to be noted that each block in the block diagrams and/or the flowcharts, and the combination of the blocks in the block diagrams and/or the flowcharts, may be implemented by a dedicated hardware based system that performs a predetermined function or action, or may be implemented by a combination of dedicated hardware and computer instructions.

The implementations of the present disclosure have been described above, and the above description is example, not exhaustive, and is not limited to the disclosed implementations. Without departing from the scope and spirit of the described implementations, many modifications and changes will be obvious to those of ordinary skill in the art. The choice of terms used herein is intended to best explain the principle, practical application or improvement of technologies in the market of each implementation, or to enable other ordinary technicians in the technical field to understand each implementation disclosed herein.

## Claims

1. A method for search recommendation, comprising:
determining whether a search box is to be presented in a page;
presenting the search box on the page in response to a determination that the search box is to be presented;
determining a search recommendation term based on multimedia content presented on the page; and
presenting at least a part of the search recommendation term in the search box.

2. The method of claim 1, wherein determining whether the search box is to be presented comprises:
determining a first length of one or more navigation tabs presented on the page in a predetermined direction, the one or more navigation tabs arranged alongside the search box in the predetermined direction;
determining a second length of the search box in the predetermined direction; and
in response to a determination that a sum of the first and second lengths is below a total length of the page in the predetermined direction, determining that the search box is to be presented on the page.

3. The method of claim 2, wherein determining the first length comprises:
determining the first length based on at least one of following parameters:
a display mode associated with display of the one or more navigation tabs;
the number of the one or more navigation tabs; and
a dissimilated navigation tab other than the one or more navigation tabs that is presented on the page, the alienated tabs being different in appearance from the one or more navigation tabs.

4. The method of claim 2, further comprising:
determining the total length based on a display parameter of a device for displaying the page.

5. The method of claim 2, wherein determining the second length comprises:
determining the second length based on a threshold number of words allowed to be presented in the search box.

6. The method of claim 2, further comprising:
in response to a determination that the sum of the first and second lengths exceeds a width of the page, presenting a search icon on the page.

7. The method of claim 1, wherein presenting at least a part of the search recommendation term in the search box comprises:
comparing the number of words included in the search recommendation term with a threshold number; and
in response to a determination that the number of words included in the search recommendation term is less than the threshold number, presenting the search recommendation term in the search box.

8. The method of claim 7, further comprising:
if the number of words included in the search recommendation term exceeds the threshold number, presenting in the search box:
a part of the words included in the search recommendation term; and
a symbol representing remaining words in the search recommendation term that are omitted.

9. The method of claim 8, wherein a total length of the part of words and the symbol corresponds to a length of the threshold number of words.

10. The method of claim 1, further comprising:
in response to a switch from a further multimedia content to the multimedia content on the page, presenting a switching process from a further search recommendation term associated with the further multimedia content to the search recommendation term in the search box.

11. The method of claim 10, wherein presenting the switching process in the search box comprises:
in response to the change from the further multimedia content to the multimedia content being associated with a same navigation tab, causing the switching process from the further search recommendation term to the search recommendation term to be presented in an upward scroll mode or a downward scroll mode.

12. The method of claim 10, wherein presenting the switching process in the search box comprises:
in response to the change from the further multimedia content to the multimedia content being associated with different navigation tabs, causing the switching process from the further search recommendation term to the search recommendation term to be presented in a fade-in-fade-out mode.

13. The method of claim 1, wherein the search recommendation term corresponds to a preferred search recommendation term to be presented in a search page.

14. The method of claim 1, wherein determining the search recommendation term comprises:
in response to obtaining a content label associated with the multimedia content presented on the page, determining the search recommendation term based on the content label.

15. The method of claim 1, wherein determining the search recommendation term comprises:
in response to a lack of a content label associated with the multimedia content presented on the page, determining a default symbol as the search recommendation term.

16. The method of claim 1, wherein presenting at least a part of the search recommendation term in the search box comprises:
presenting the search recommendation term in a centered mode in the search box.

17. The method of claim 1, wherein presenting the search box on the page comprises:
presenting the search box at a top of the page.

18. An apparatus for search recommendation, comprising:
a first determination module configured to determine whether a search box is to be presented in a page;
a first presentation module configured to present the search box on the page in response to a determination that the search box is to be presented;
a second determination module configured to determine a search recommendation term based on the multimedia content presented on the page; and
a second presentation module that present at least a part of the search recommendation term in the search box.

19. An electronic device, comprising:
at least one processing unit; and
at least one memory coupled to the at least one processing unit and storing instructions for execution by the at least one processing unit, the instructions, when executed by at least one processing unit, causing the device to perform the method according to any of claims 1 to 17.

20. A computer-readable storage medium having a computer program stored thereon which, when executed by a processor, implementing the method according to any of claims 1 to 17.
